# EUROPEAN PATENT SPECIFICATION

(11) **EP 1 102 697 B1**
(45) Date of publication and mention of the grant of the patent: **12.03.2003**
(21) Application number: 00935587.6
(22) Date of filing: 08.06.2000
(51) Int. Cl.: B62K 21/00

(54) **FRONT WHEEL STEERING APPARATUS FOR MOTORCYCLE AND THREE-WHEELER**
LENKEINRICHTUNG FÜR EIN MOTORRAD UND DREIRAD
DISPOSITIF DE DIRECTION D'UNE ROUE AVANT, DESTINE A UN CYCLE A MOTEUR ET A DES TROIS ROUES

(30) Priority: 08.06.1999 JP 16172799
(43) Date of publication of application: 30.05.2001
(73) Proprietor: Honda Giken Kogyo Kabushiki Kaisha, Minato-ku, Tokyo 107-8556 (JP)
(72) Inventor: Takayanagi, Shinji, Honda R & D Co., Ltd., Wako-shi, Saitama 351-0113 (JP); Kobayashi, Hiroyoshi, Honda R & D Co., Ltd., Wako-shi, Saitama 351-0113 (JP); Nakagawa, Mitsuo, Honda R & D Co., Ltd., Wako-shi, Saitama 351-0113 (JP); Furuhashi, Hiromi, Honda R & D Co., Ltd., Wako-shi, Saitama 351-0113 (JP)
(74) Representative: Prechtel, Jörg, Dipl.-Phys. Dr.
(86) International application number: JP0003714
(87) International publication number: WO00075002

(56) References cited:
- EP-A- 0 432 107
- DE-A- 4 131 195
- US-A- 4 723 785
- US-A- 5 042 609

## Description

### TECHNICAL FIELD

The present invention relates to improvements in a front suspension and a steering apparatus for a motorcycle and a three-wheeler.

### BACKGROUND ART

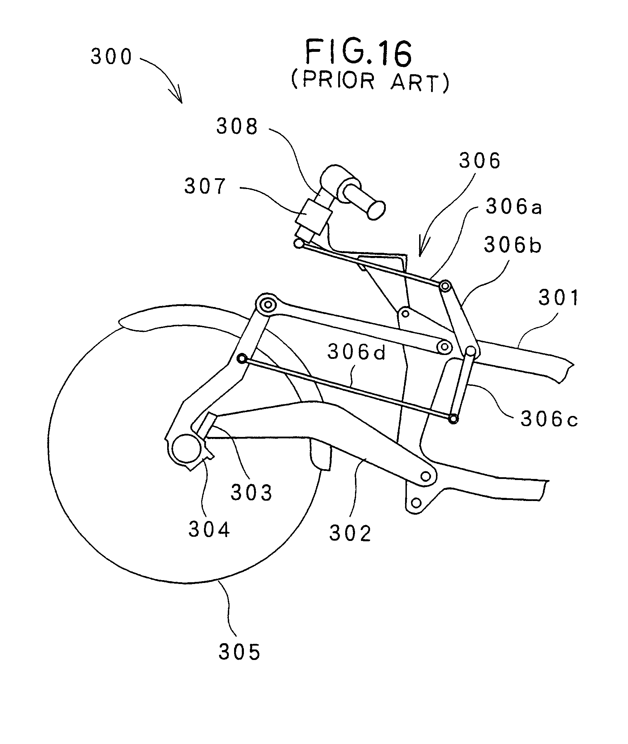

A motorcycle of the type having a swing arm front suspension system for suspending its front wheel and a steering system for steering the front wheel is disclosed in, for example, Japanese Patent Laid-Open Publication No. SHO-62-175275. This motorcycle is as illustrated in Fig. 16 hereof.

As can be appreciated from Fig. 16, the motorcycle 300 has the construction wherein a swing arm 302 is vertically swingably secured to a front portion of a vehicle frame 301, a knuckle arm 304 is horizontally turnably secured to an end of the swing arm 302 by means of a joint 303, a front wheel 305 is rotatably secured to the knuckle arm 304, and a link mechanism 306 (including link members 306a to 306d) is connected at one end to the knuckle arm 304 and at an opposite end to a steering shaft 308 rotatably secured to a head pipe 307.

In the above-described motorcycle 300, it is important in terms of its characteristics how the position of the front wheel 305 should be set with respect to the position of the head pipe 307. In general, if the shape and dimensions of the vehicle frame 301 are changed, the position of the head pipe 307 relative to the vehicle frame 301 is shifted forwardly or rearwardly according to the change. According to this shift, the position of the steering shaft 308 rotatably secured to the head pipe 307 is also shifted forwardly or rearwardly. For this reason, if the shape and the dimensions of the vehicle frame 301 are to be changed, the length of the swing arm 302 and the lengths of the link members 306a to 306d must be changed. As a result, each time the vehicle frame 302 is changed, the swing arm 302 and the link mechanism 306 must be changed, and if the cost of the motorcycle 300 is to be reduced, there is room for improvement.

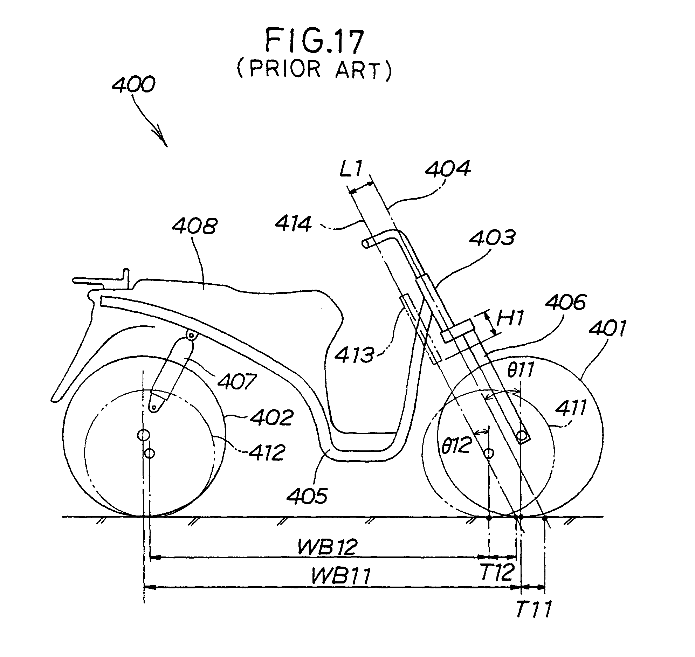

Moreover, in motorcycles, the diameters of front wheels or rear wheels are often changed according to the kinds of vehicles. If the diameter of a front wheel is changed, the position of a head pipe changes. This point will be described below with reference to the telescopic front suspension motorcycle shown in Fig. 17 hereof.

In Fig. 17, a motorcycle 400 is equipped with a front wheel 401 of large diameter and a rear wheel 402 of large diameter which are shown by solid lines. A head pipe 403 lies at the position shown by solid lines, and the wheel base between the front and rear wheels 401 and 402 is WB11, the caster angle of a steering shaft axis 404 is θ11, and the trail of the front wheel 401 is T11. In Fig. 17, reference numeral 405 denotes a vehicle frame, reference numeral 406 a front fork, reference numeral 407 a rear suspension, and reference numeral 408 a seat.

On the other hand, if the motorcycle 400 has a front wheel 411 of small diameter and a rear wheel 412 of small diameter which are shown by imaginary lines, a head pipe 413 lies at the position shown by imaginary lines. The height of the head pipe 413 shown by the solid lines differs by H1 from the height of the head pipe 403 shown by the imaginary lines, and a steering shaft axis 414 of the head pipe 413 deviates by a distance L1 from the steering shaft axis 404 of the head pipe 403. At this time, the wheel base is WB12, the caster angle of the steering shaft axis 414 is θ12, and the trail of the front wheel 411 is T12.

In the motorcycle 400, the wheel bases WB11 and WB12, the caster angles θ11 and θ12, and the trails T11 and T12 are set to take account of its steering characteristics. Accordingly, the respective positions of the head pipes 403 and 413 are individually set. The head pipes 403 and 413 are integrally provided on the vehicle frame 405, and if the positions of the head pipes 403 and 413 are changed, the vehicle frame 405 must also be changed. As a result, each time the diameters of the front and rear wheels 401 and 402 are changed, the vehicle frame 405 must be changed, and if the cost of the motorcycle 400 is to be reduced, there is room for improvement. This also applies to a motorcycle equipped with a swing arm front suspension.

### DISCLOSURE OF THE INVENTION

An object of the present invention is to provide a front wheel steering apparatus for a motorcycle and a three-wheeler, which enables a swing arm and a link mechanism to be used in common even when a vehicle frame is changed in a motorcycle and a three-wheeler equipped with a swing arm front suspension system and a steering system.

Another object of the present invention is to provide a front wheel steering apparatus for a motorcycle and a three-wheeler, which enables a vehicle frame to be used in common even when the diameter of a front wheel is changed.

According to an aspect of the present invention, there is provided a front wheel steering apparatus for steering a front wheel of one of a motorcycle and a three-wheeler, which apparatus comprises: a main frame; a swing arm secured vertically swingably to the main frame; an axle holder block secured horizontally turnably to the swing arm via a kingpin; a front wheel rotatably secured to the axle holder block; a knuckle extending from the axle holder block, and a link mechanism connected to a steering shaft which in turn is rotatably secured to a head pipe having one end connected to the knuckle and an opposite end provided integrally with the main frame, characterized in that the kingpin has a center line offset with respect to a center line of the steering shaft and positioned not to pass through a center of said front wheel, and that the link mechanism comprises a bendable link having a first link and a second link interconnected at a joint thereof via a universal joint so that the first and second links can bend about the joint for accommodating vertical movements of the front wheel.

The joint for bendably connecting the first link and the second link is made of a universal joint. As the universal joint a ball joint may be used. By steering the steering shaft, the front wheel is steered via the first link, the universal joint, the second link, the knuckle and the axle holder block. Even when the swing angle of the second link which swings horizontally, that is, in a right-and-left direction together with the knuckle does not agree with the swing angle of the first link which swings horizontally (in a right-and-left direction) by the steering shaft, the deviation between these swing angles is allowed by the universal joint. In other words, when the position of the head pipe relative to a vehicle frame is changed by changing the shape and dimensions of the vehicle frame, even when the center line of the kingpin is offset with respect to the center line of the steering shaft, the offset is allowed by the universal joint. Accordingly, a front suspension system and a steering system can be operated smoothly at all times. Accordingly, it is possible to simplify the constructions of the swing arm and the link mechanism. It also becomes possible to easily use in common the swing arm and the link mechanism, thereby reducing the cost of motorcycle production.

By thus setting the amount of offset of the center line of the kingpin with respect to the center line of the steering shaft, it becomes possible to freely set the steering characteristics (steering angle and steering force characteristics) of the steering system.

In a preferred form of the present invention, in order to make the center line of the steering shaft intersect with the center line of the head pipe at an arbitrary angle, a top plate and a bottom plate are replaceably secured to the top and the bottom of the head pipe and the steering shaft is inserted through a through-hole opened in the top plate and a through-hole opened in the bottom plate.

Accordingly, when the diameter of the front wheel is to be changed, the top and bottom plates may be replaced with a top plate and a bottom plate which correspond to the diameter of the front wheel, whereby the position and inclination of the center line of the steering shaft relative to the center line of the head pipe is changed. Accordingly, it is unnecessary to change the position of the head pipe. It is also unnecessary to change the vehicle frame integrally provided with the head pipe. That is, the present invention is advantageous in terms of cost in that different vehicle frames from that of a motorcycle using a front wheel of small diameter to that of a motorcycle using a front wheel of large diameter can be constructed with one kind of vehicle frame.

### BRIEF DESCRIPTION OF THE DRAWINGS

A preferred embodiment of the present invention will be described in more detail below, by way of example only, with reference to the accompanying drawings in which:
Fig. 1 is a schematic side elevational view illustrating a scooter-type motorcycle employing the present invention;
Fig. 2 is a perspective view showing, on an enlarged scale, an embodiment of a front wheel steering apparatus of the motorcycle shown in Fig. 1;
Fig. 3 is a side view illustrating a front suspension system and a steering system of the front wheel steering apparatus shown in Fig. 2;
Fig. 4 is a side view illustrating part of the front wheel shown in Fig. 2;
Fig. 5 is an enlarged cross-sectional view taken along line 5-5 of Fig. 4;
Fig. 6 is a schematic view illustrating an operation of the of the front suspension system and the steering system according to the first embodiment;
Fig. 7A is a schematic view illustrating the arrangements of the front suspension system and the steering system with a lower end portion of a steering shaft positioned rearwardly of a kingpin;
Fig. 7B is a diagrammatic view illustrating operations of the front suspension system and the steering system of Fig. 7A as viewed in an arrowed direction;
Fig. 8A is a schematic view illustrating the arrangements of the front suspension system and the steering system with the lower end portion of the steering shaft positioned forwardly of the kingpin;
Fig. 8B is a diagrammatic view illustrating operations of the front suspension system and the steering system of Fig. 8A as viewed in an arrowed direction;
Fig. 9A is a schematic side view illustrating the arrangements of a front suspension system and a steering system according to a second embodiment of the present invention;
Fig. 9B is a diagrammatic view illustrating operations of the front suspension system and the steering system of Fig. 9A as viewed in an arrowed direction;
Fig. 10 is a cross-sectional view showing a first example mode of attachment of the steering shaft to a head pipe;
Fig. 11 is a cross-sectional view showing a second example mode of attachment of the steering shaft to the head pipe;
Fig. 12 is a cross-sectional view showing a third example mode of attachment of the steering shaft to the head pipe;
Fig. 13 is a cross-sectional view showing a fourth example mode of attachment of the steering shaft to the head pipe;
Fig. 14A is a schematic side view illustrating the arrangements of the front suspension system and the steering system with a front wheel of small diameter secured thereto;
Fig. 14B is a diagrammatic view illustrating operations of the front suspension system and the steering system of Fig. 14A as views in an arrowed direction;
Fig. 15 is a schematic side view showing a motorcycle with wheels of large diameter attached thereto, as compared to that with wheels of small diameter attached thereto;
Fig. 16 is a schematic view showing a front part of a prior art motorcycle; and
Fig. 17 is a diagrammatic side view of a prior art motorcycle with wheels of large diameter attached thereto, as compared to that with wheels of small diameter attached thereto.

### BEST MODE FOR CARRYING OUT THE INVENTIOIN

The following description is merely exemplary in nature and is in no way intended to limit the invention, its application or uses.

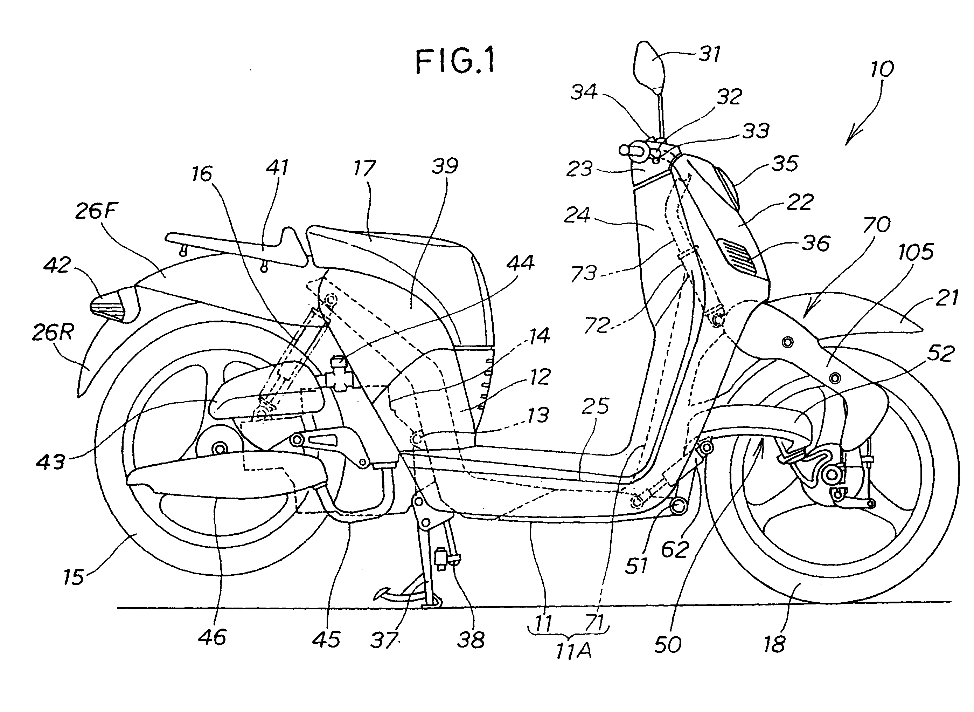

Discussion will be made first as to a scooter-type motorcycle with a front wheel steering apparatus according to an embodiment of the present invention as applied thereto, as illustrated in Figs. 1 to 8B.

As shown in Fig. 1, a scooter-type motorcycle 10 (hereinafter referred to as simply "motorcycle 10") includes a main frame 11 made of a frame body in its central lower portion. A frame pivot 12 is provided in a rear portion of the main frame 11. A power unit 14 is vertically swingably secured to the frame pivot 12 via a pivot shaft 13. A rear wheel 15 is secured to the power unit 14. The power unit 14 is suspended from an upper portion of the rear portion of the main frame 11 by a rear cushion 16. A seat 17 is secured to the upper portion of the rear portion of the main frame 11. Moreover, a front suspension system 50 for suspending a front wheel 18 and a steering system 70 separate from the front suspension system 50 are provided in a front portion of the main frame 11.

The motorcycle 10 further includes a front fender 21, a front cover 22, a handle cover 23, a leg shield 24 for covering the legs of a driver, a step floor 25 for resting the feet of the driver, and two front and back rear fenders 26F and 26R.

In Fig. 1, reference numeral 31 denotes a mirror, reference numeral 32 a handlebar, reference numeral 33 a brake manipulating lever, reference numeral 34 a speedometer, reference numeral 35 a head lamp, reference numeral 36 a winker, reference numeral 37 a main stand, reference numeral 38 a side stand, reference numeral 39 a sidecar which also serves as an accommodating box, reference numeral 41 a carrier, reference numeral 42 a tail lamp, reference numeral 43 an air cleaner, reference numeral 44 a carburetor, reference numeral 45 an exhaust pipe, and reference numeral 46 a muffler.

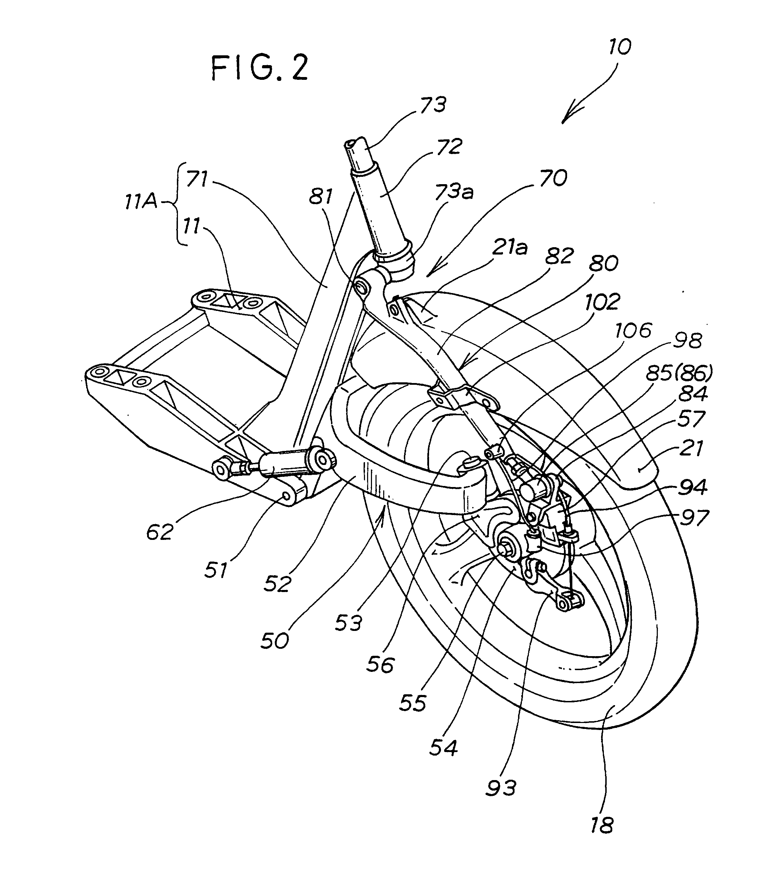

Turning now to Fig. 2, the front suspension system 50 has a swing arm 52 secured to a front lower portion of the main frame 11 via a pivot shaft 51. The swing arm 52 vertically swings about the pivot shaft 51. An axle holder block 54 is secured to a front end portion of the swing arm 52 via a kingpin 53 such that it can swing in a right-and-left direction. A front wheel 18 is rotatably secured to the axle holder block 54 via an axle 55. The front suspension system 50 takes the form of a swing arm suspension wherein the swing arm 52 extends from a front part of the main frame 11 toward the front of the vehicle and the front wheel 18 is vertically movably supported on the swing arm 52.

The steering system 70 has a head pipe post 71 which extends obliquely upwardly from the front portion of the main frame 11 toward the front. The front end portion of the head pipe post 71 is equipped with an integrally formed head pipe 72. The steering shaft 73 is rotatably secured to the head pipe 72. A lower end portion 73a of the steering shaft 73 is connected to a knuckle 57 via a link mechanism 80. More specifically, the knuckle 57 is integrally formed on the axle holder block 54, with one end of the link mechanism 80 being connected to the knuckle 57 and the other end of the link mechanism 80 being connected to the steering shaft 73 so that the front wheel 18 can be steered.

In this arrangement, the combined structure of the main frame 11 and the head pipe post 71 constitutes a vehicle body frame 11A.

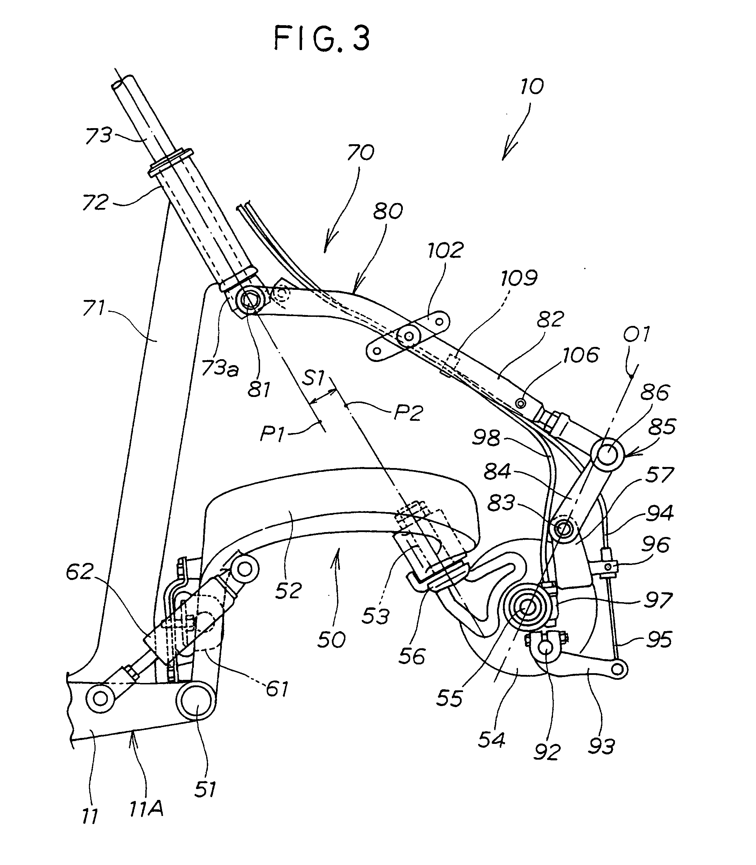

As shown in Fig. 3, the axle holder block 54 is arranged such that a rear lower portion of the axle holder block 54 has a supporting portion (kingpin securing portion) 56 to which to secure a kingpin 53, and the axle 55 is secured to the center of the axle holder block 54, and the knuckle 57 is extended to a small extent along a line O1 which extends upwardly from the axle 55 toward the front. The kingpin 53 may be integrally formed on the axle holder block 54 via the supporting portion 56.

The front suspension system 50 has a structure in which a shock absorber 61 which absorbs shock in the swinging direction of the swing arm 52 (shock from the surface of a road) and a front damper 62 which reduces the amplitude of vibration in the swinging direction of the swing arm 52 are separately provided. The shock absorber 61 is an elastically deformable resin-made block which serves a spring function, and is interposed between the main frame 11 and the swing arm 52 to play the role of a spring. The front damper 62 is secured between the swing arm 52 and a side portion of the front portion of the main frame 11.

The link mechanism 80 includes a first link 82 and a second link 84 which are bendable so as to cope with the up and down movement of the front wheel 18 (refer to Fig. 2). These first link 82 and second link 84 are pivotally connected via a joint portion 85.

One end portion of the first link 82 is swingably connected to a lower end portion 73a of the steering shaft 73 via a first connecting pin 81. One end portion of the second link 84 is swingably connected to an end of the knuckle 57 via a second connecting pin 83. The other end portions of the first and second links 82 and 84 are swingably connected in the joint portion 85 by a universal joint 86. The universal joint 86 is, for example, a ball joint.

In the present embodiment, a center line P2 of the kingpin 53 is offset forwardly by a dimension S1 with respect to a center line P1 of the steering shaft 73. These center lines P1 and P2 are nearly parallel to each other.

Referring to the positional relationship between each of the members, the lower end portion 73a of the steering shaft 73 is disposed forwardly and upwardly of the pivot shaft 51, the first connecting pin 81 is disposed at the same position as the lower end portion 73a, the kingpin 53 is disposed forwardly and downwardly of the first connecting pin 81, the axle 55 is disposed forwardly of the kingpin 53, the second connecting pin 83 is disposed forwardly and upwardly of the axle 55, and the joint portion 85 is disposed forwardly and upwardly of the second connecting pin 83.

In other words, the second connecting pin 83 is disposed forwardly and upwardly of the pivot shaft 51, the joint portion 85 is disposed forwardly and upwardly of the second connecting pin 83, and the lower end portion 73a of the steering shaft 73 and the first connecting pin 81 are disposed rearwardly and upwardly of the joint portion 85. That is to say, the joint portion 85 lies at a position (forwardly and upwardly of the knuckle 57) near the end of the knuckle 57 and nearly along the line O1.

The first link 82 is a long link which extends forwardly downwardly from the first connecting pin 81 to the vicinity of the end of the knuckle 57. The second link 84 is shorter than the first link 82.

A brake cable 94 and a speedometer cable 98 run along the link mechanism 80, particularly, the first link 82. These brake cable 94 and speedometer cable 98 are flexible linear members which are passed between the front wheel 18 (refer to Fig. 2) and the vehicle body frame 11A (a vehicle body). More specifically, the flexible linear members 94 and 98 which are extended from the front wheel (the axle holder block 54) are disposed to run along the first link 82, further along a portion where the first link 82 is connected to the lower end portion 73a, i.e., the central portion of swing of the first link 82, and along the head pipe 72 and the steering shaft 73. Intermediate portions of the respective flexible linear members 94 and 98 are secured to the first link 82 by a clamp 109.

In this manner, the flexible linear members 94 and 98 can be passed between the front wheel 18 and the vehicle body. Accordingly, it is not necessary to bend the flexible linear members 94 and 98 to a great extent between the front wheel 18 and the vehicle body. It is, therefore, possible to adequately and easily arrange the flexible linear members 94 and 98 without allowing them to interfere with the front wheel 18.

As is apparent from the above description, since various kinds of flexible linear members (cables, harnesses and horses) are disposed to run along the link mechanism 80 between the front wheel 18 and the vehicle body frame 11A, it is possible to adequately and easily arrange the flexible linear members and to improve the external appearance. In addition, it is possible to decrease friction (frictional resistance) when the flexible linear members are bent.

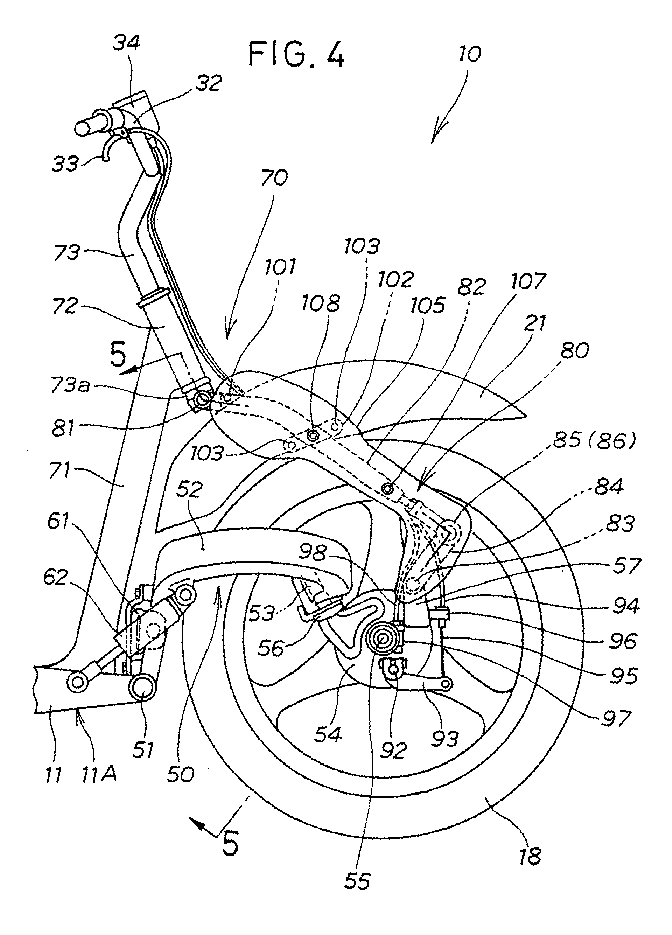

In Fig. 4, the handlebar 32 is connected to the steering shaft 73. The brake manipulating lever 33 and the speedometer 34 are secured to the handlebar 32. A brake operating arm 93 and a speed detecting gearbox 97 are secured to the axle holder block 54. The gearbox 97 has a built-in gear which is not shown, and is a well-known mechanism which detects the rotation of the axle 55 via this gear. The brake manipulating lever 33 and the brake operating arm 93 are connected to each other by a brake cable 94. One end of an inner wire 95 of the brake cable 94 is connected to the brake operating arm 93. Reference numeral 94 denotes an outer mounting part for the brake cable. The speedometer 34 and the gearbox 97 are connected to each other by the speedometer cable 98. If the speedometer 34 is an electrical meter, a harness may be used in place of the speedometer cable 98.

In the present embodiment, a side of the link mechanism 80 and the flexible linear members 94 and 98 disposed to run along the link mechanism 80 are covered with a cover 105. Since the link mechanism 80 includes the joint portion 85 and is bent in the shape of a dog's leg, the cover 105 which covers nearly the whole of the link including the bent portion is also bent in the shape of a dog's leg.

In this manner, with the cover 105, it is possible to reduce the externally exposed portions of the link mechanism 80 and the flexible linear members 94 and 98. Accordingly, it is possible to effectively protect the link mechanism 80 and the flexible linear members 94 and 98 from the outside. In addition, the external appearance of the motorcycle 10 can be improved.

Two upper and side portions of the front fender 21 are secured to the long first link 82 by bolts 101, 103 and 103, and two side portions of the cover 105 are secured to the same by bolts 107 and 108. Details of this securing structure will be described later.

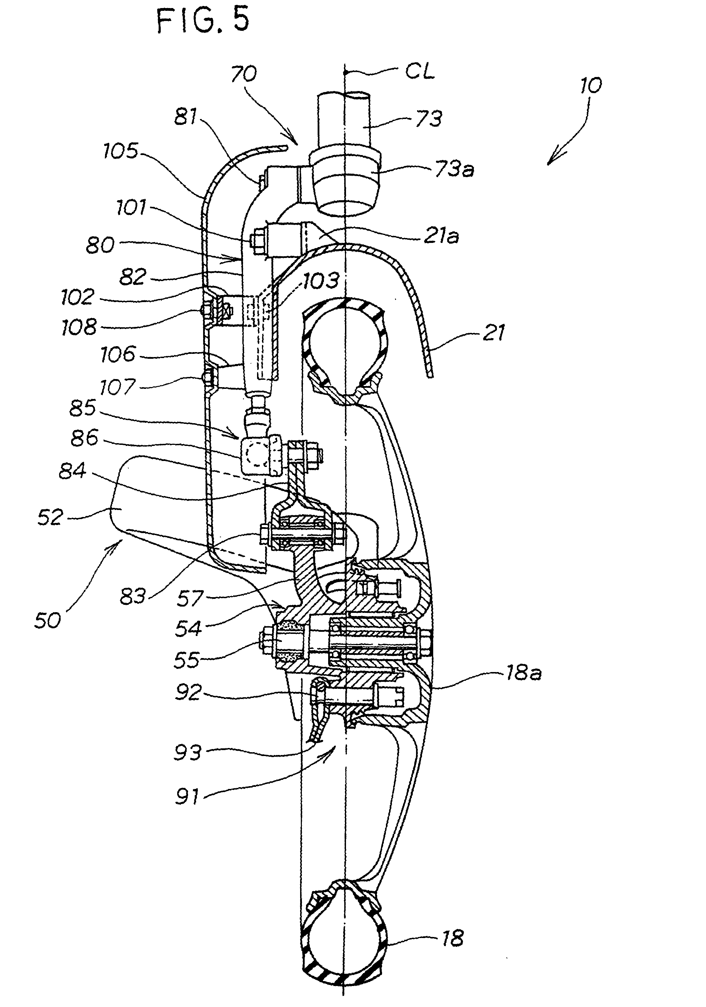

Fig. 5 shows that the axle holder block 54 is extended on both sides of a vehicle center CL and that the first link 82 is extended forwardly while being bent from the lower end portion 73a of the steering shaft 73, that lies on the vehicle center line CL, toward the left side of Fig. 5 in such a manner as to bypass the front wheel 18. A front drum brake 91 is assembled between the axle holder block 54 and a hub 18a of the front wheel 18. The front drum brake 91 has a structure in which a brake operating shaft 92 is rotatably secured to the axle holder block 54 and the brake operating arm 93 is secured to the brake operating shaft 92.

Discussion will be made next as to the mounting structure of the front fender 21 and the cover 105.

The front fender 21 integrally has a stay 21a on its upper rear portion, and is fixed to the first link 82 in such a way that the stay 21a is secured to the first link 82 by a bolt 101 and one side of the lengthwise middle portion of the front fender 21 is secured to a stay 102 of the first link 82 by the bolts 103.

The cover 105 is fixed to the first link 82 in such a way that one side of the lower front portion of the cover 105 is secured to a securing boss 106 of the first link 82 by a bolt 107 and one side of the lengthwise middle portion of the cover 105 is secured to the stay 102 by a bolt 108.

In this manner, since the front fender 21 and the cover 105 are secured to the first link 82, there is no need for a securing member made of a different member, for securing them to the vehicle body frame 11A (refer to Fig. 4), and the securing process becomes simple.

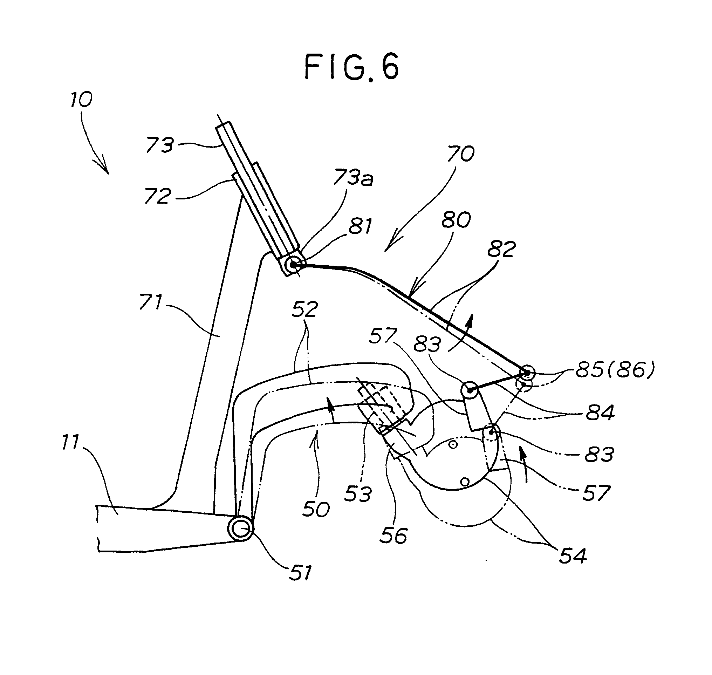

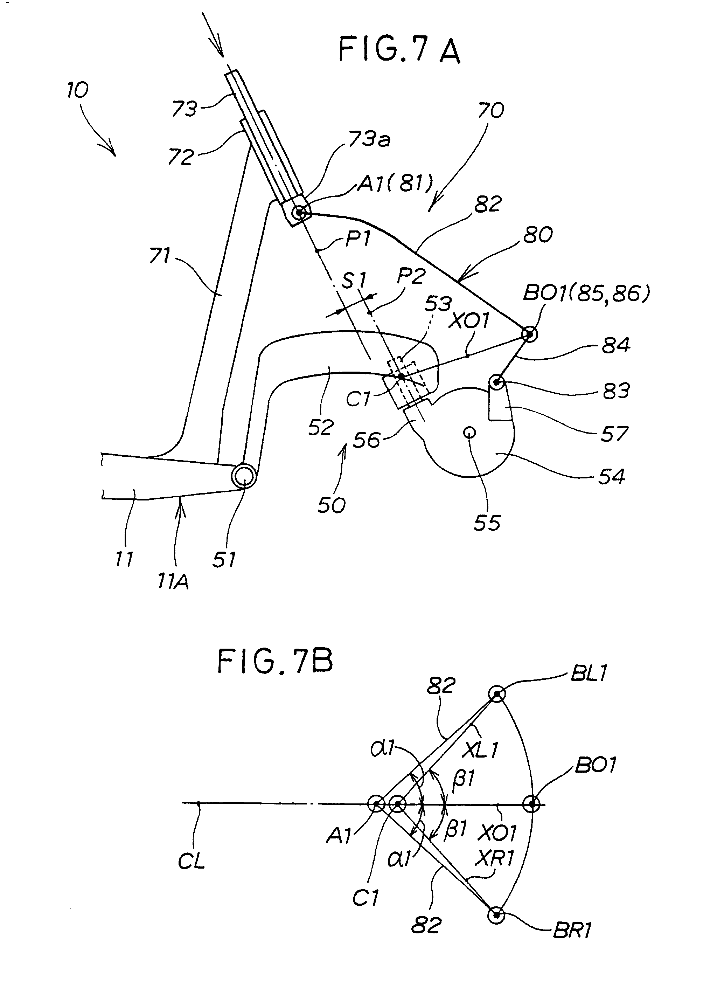

Figs. 6 and 7 are views illustrating the operation of the front suspension system 50 and that of the steering system 70 according to the present invention.

In Fig. 6, as the front wheel 18 (refer to Fig. 4) moves up and down, the swing arm 52 and the axle holder block 54 swing up and down about the pivot shaft 51 according to the amount of movement of the front wheel 18. As a result, the second link 84 and the first link 82 which are connected to the knuckle 57 swing up and down. The amount of swing of the second link 84 is smaller than the amount of swing of the first link 82.

First link 82 is a long link, one end of which is connected to the lower end portion 73a of the steering shaft 73 and the other end of which is extended to the vicinity of the end of the knuckle 57. Accordingly, the up and down swinging movement of the link mechanism 80 is far smoother than the up and down swinging movement of the front suspension system 50. As a result, good cushion performance can be obtained with the front suspension system 50. In addition, the cushion function necessary for the swing arm type of front suspension system 50 and the steering function necessary for the steering system 70 can be made independent of each other and can be operated well.

In Fig. 7A, the center line P2 of the kingpin 53 is offset forwardly by the dimension S1 with respect to the center line P1 of the steering shaft 73. It is assumed here that a point A1 indicates the position of the first connecting pin 81, a point BO1 indicates the position of the joint portion 85, a point C1 indicates the position of connection of the kingpin 53 to the swing arm 52, and a line XO1 indicates a line which connects the point BO1 and the point C1.

These points A1, BO1 and C1 may be represented in a projected form as illustrated in Fig. 7B by viewing them in an arrowed direction of Fig. 7A. When the steering angle of the steering shaft 73 is zero, i.e., during a neutral state, the points A1, BO1 and C1 and the line XO1 are aligned on the vehicle center CL.

When the first link 82 is steered leftwardly by a steering angle α1 from the neutral state with the steering shaft 73, the point BO1 is displaced to the point BL1. As a result, the line XO1 swings about the point C1 and reaches a line XL1 which connects the point BL1 and the point C1. The steering angle from the line XO1 to the line XL1 is β1.

On the other hand, when the first link 82 is steered rightwardly by the steering angle α1 from the neutral state, the point BO1 is displaced to a point BR1. As a result, the line XO1 swings about the point C1 and reaches a line XR1 which connects the point BR1 and the point C1. The steering angle from the line XO1 to the line XR1 is β1.

As is apparent from the above description, since the center line P2 of the kingpin 53 is offset forwardly by the offset quantity or amount S1 with respect to the center line P1 of the steering shaft 73, the point C1 lies at a position which is forwardly away from the point A1 by a distance S1. Since the point C1 lies forwardly of the point A1, the steering angle β1 is greater than the steering angle α1 (α1 <β1). Accordingly, steering force due to the steering shaft 73 is large compared to the case in which no offsetting is adopted.

By changing the offset quantity S1, the distance S10 changes. As a result, the proportion of the steering angle β1 to the steering angle α1 can be changed.

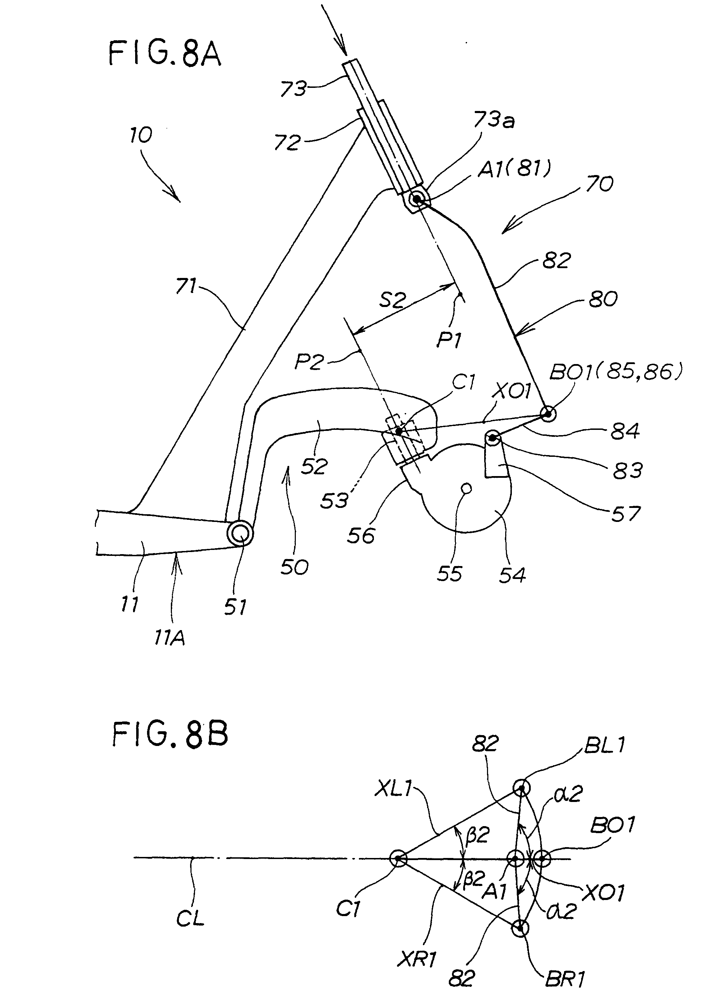

Fig. 8A shows a modification of the front suspension system and the steering system shown as the first embodiment.

The modification shown in Fig. 8A is an example in which by changing the position of the head pipe 72 with respect to the vehicle body frame 11A, the center line P2 of the kingpin 53 is offset rearwardly by a dimension S2 with respect to the center line P1 of the steering shaft 73. The dimensions and arrangement of the front suspension system 50 and the dimensions of the link mechanism 80 are identical to those of the construction of the first embodiment shown in Fig. 7A.

Points A1, BO1 and C1 may be represented in a projected form as illustrated in Fig. 8B by viewing them in an arrowed direction of Fig. 8A, similarly to those shown in Fig. 7B. When the steering angle of the steering shaft 73 is zero, i.e., during the neutral state, the points A1, BO1 and C1 and the line XO1 are aligned on the vehicle center CL.

If the first link 82 is steered leftwardly by a steering angle α2 from the neutral state with the steering shaft 73, the point BO1 is displaced to the point BL1. As a result, the line XO1 swings about the point C1 and reaches the line XL1 which connects the point BL1 and the point C1. The steering angle from the line XO1 to the line XL1 is β2.

On the other hand, if the first link 82 is steered rightwardly by the steering angle α2 from the neutral state, the point BO1 is displaced to the point BR1. As a result, the line XO1 swings about the point C1 and reaches the line XR1 which connects the point BR1 and the point C1. The steering angle from the line XO1 to the line XR1 is β2.

As is apparent from the above description, since the center line P2 of the kingpin 53 is offset rearwardly by the offset quantity S2 with respect to the center line P1 of the steering shaft 73, the point C1 lies at a position which is rearwardly away from the point A1 by a distance S2. Since the point C1 lies rearwardly of the point A1, the steering angle β2 is smaller than the steering angle α2 (α2 > β2). Accordingly, the steering force due to the steering shaft 73 is small compared to the case in which no offsetting is adopted.

By changing the offset quantity S2, the proportion of the steering angle β2 to the steering angle α2 can be changed.

As described above, according to the first embodiment and the modification, since the steering angle β1 differs from the steering angle α1 and the steering angle β2 differs from the steering angle α2, the joint portion 85 has the structure using the universal joint 86. Specifically, even if the steering angles (swing angles) β1 and β2 of the second link 84 which swings horizontally together with the knuckle 57 disagree with the steering angles (swing angles) α1 and α2 of the first link 82 which is swung horizontally (in a right-and-left direction) by the steering shaft 73, the universal joint 86 allows the deviation between these swing angles.

Accordingly, when the position of the head pipe 72 with respect to the vehicle body frame 11A is changed by changing the shape and dimensions of the vehicle body frame 11A, even if the center line P2 of the kingpin 53 is offset with respect to the center line P1 of the steering shaft 73, the offset is allowed by the universal joint 86. Accordingly, the link mechanism 80 operates extremely smoothly. As a result, the front suspension system 50 and the steering system 70 can be operated smoothly at all times.

Accordingly, even when the position of the head pipe 72 with respect to the vehicle body frame 11A is changed, it is possible to simplify the constructions of the front suspension system 50 and the link mechanism 80 and it is possible to use in common the front suspension system 50 and the link mechanism 80.

Moreover, by setting the offset quantities S1 and S2, it is possible to freely set the steering characteristics of the steering system 70, i.e., a steering angle characteristic (the proportion characteristic of the steering angle of the front wheel 18 with respect to the steering angle of the steering shaft 73) and a steering force characteristic (the characteristic of the force with which the steering shaft 73 steers the front wheel 18). As a matter of course, if each of the offset quantities S1 and S2 is set to zero (S1 = 0, S2 = 0), it is possible to steer the steering system 70 with normal steering characteristics.

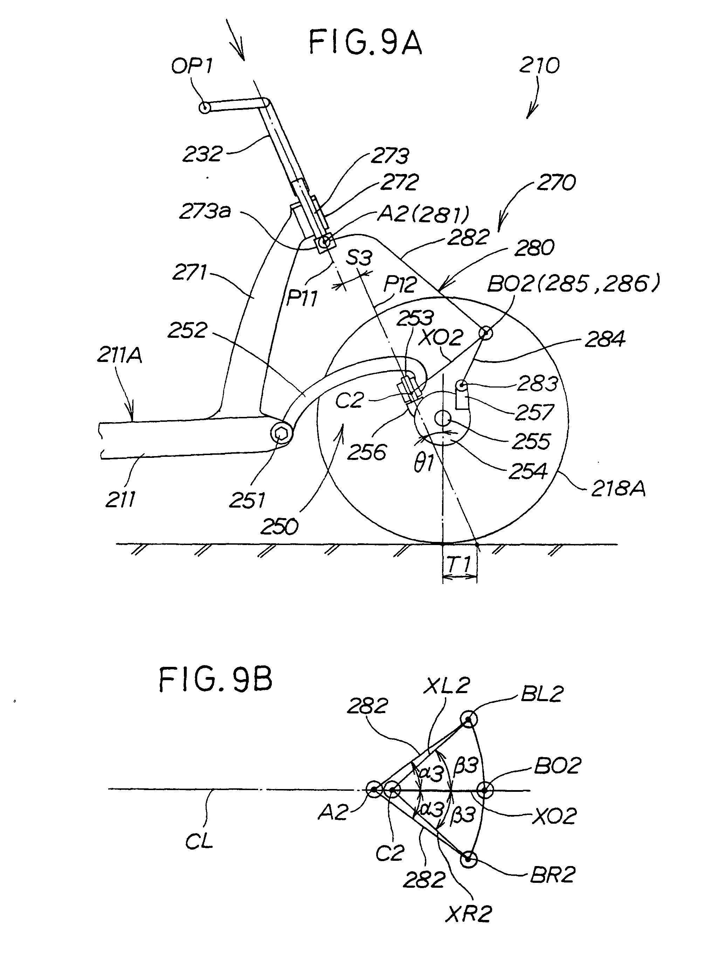

The second embodiment shown in Figs. 9A to 15 will be described below. In the description of this second embodiment, constituent members similar to those of the first embodiment shown in Figs. 1 to 7B are denoted by reference numerals obtained by adding 200 to the respective reference numerals mentioned previously, and the description thereof is omitted.

In Fig. 9A, a scooter type motorcycle 210 (hereinafter referred to simply as the "motorcycle 210") according to the second embodiment is characterized in that in a steering system 270, a center line P11 of a steering shaft 273 can be made to intersect the center line of a head pipe 272 at an arbitrary angle. The other construction is identical to that of the first embodiment shown in Figs. 1 to 7B. A structure which secures the steering shaft 273 to the head pipe 272 will be described later.

The embodiment shown in Fig. 9A is an example in which a large-diameter front wheel 218A is suspended by a swing arm type front suspension system 250. In this case, the caster angle of a center line P12 of a kingpin 253 is denoted by θ1, and the trail of the front wheel 218A is denoted by T1. The center line P12 of the kingpin 253 is offset forwardly by a dimension S3 with respect to the center line P11 of the steering shaft 273.

Assume now that a point A2 indicates the position of a first connecting pin 281, a point B02 indicates the position of a joint portion 285, a point C2 indicates the position of connection of the kingpin 253 to a swing arm 252, and a line XO2 indicates a line which connects the point BO2 and the point C2. These points A2, BO2 and C2 may be represented in a projected form as illustrated in Fig. 9B by viewing them in an arrowed direction of Fig. 9A. When the steering angle of the steering shaft 273 is zero, i.e., during a neutral state, the points A2, BO2 and C2 and the line XO2 are aligned on the vehicle center CL.

When a first link 282 is steered leftwardly by a steering angle α3 from the neutral state with the steering shaft 273, the point BO2 is displaced to the point BL2. As a result, the line XO2 swings about the point C2 and reaches a line XL2 which connects the point BL2 and the point C2. The steering angle from the line X02 to the line XL2 is β3.

On the other hand, if the first link 282 is steered rightwardly by the steering angle α3 from the neutral state, the point BO2 is displaced to a point BR2. As a result, the line XO2 swings about the point C2 and reaches a line XR2 which connects the point BR2 and the point C2. The steering angle from the line XO2 to the line XR2 is β3.

As is apparent from the above description, since the center line P12 of the kingpin 253 is offset forwardly by the offset quantity S3 with respect to the center line P11 of the steering shaft 273, the point C2 lies at a position which is forwardly away from the point A2 by a distance S3. By changing the offset quantity S3, the proportion of the steering angle β3 to the steering angle α3 can be changed.

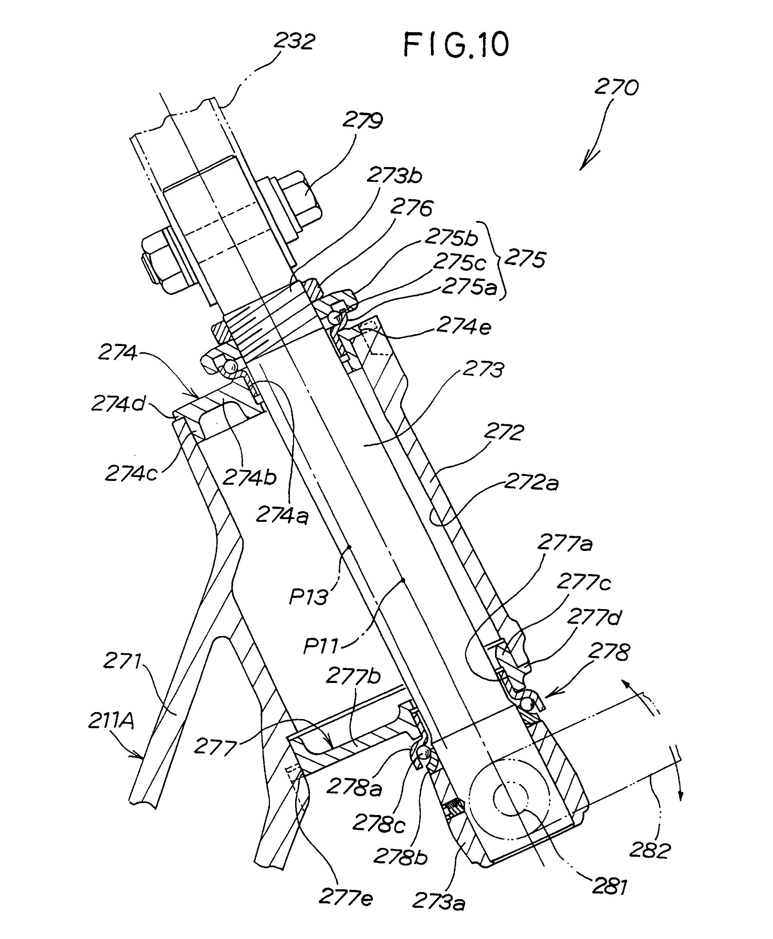

Fig. 10 shows a first example mode of attachment of the steering shaft 273 to the head pipe 272. As shown in the Figure, the head pipe 272 is integrally formed on a vehicle frame 211A, and has a through-hole 272a formed to extend vertically through the head pipe 272 so that the steering shaft 273 is inserted through the through-hole 272a. This through-hole 272a is a hole of comparatively larger diameter than the diameter of the steering shaft 273 so that the center line P11 of the steering shaft 273 is made to intersect a center line P13 of the head pipe 272 at an arbitrary angle. For example, the through-hole 272a is an elliptical hole which is forwardly and rearwardly longer than the diameter of the steering shaft 273, or a circular hole which is larger than the same.

A lower end portion 273a of the steering shaft 273 has a larger diameter than other portion of this shaft, and has, for example, a collar secured to the steering shaft 273 by a machine screw or the like.

The securing structure of the steering shaft is such that a top plate 274 and a bottom plate 277 are replaceably secured to the top and bottom of the head pipe 272 and the steering shaft 273 is rotatably inserted through a through-hole 274a opened in the top plate 274 and a through-hole 277a opened in the bottom plate 277.

The top plate 274 supports the steering shaft 273 via a first bearing 275 and a lock nut 276. The bottom plate 277 supports the steering shaft 273 via a second bearing 278.

Specifically, the top plate 274 is made of a body portion 274b having the through-hole 274a, a fitting portion 274c fitted in the through-hole 272a of the head pipe 272, a flange 274d fitted in abutment with the upper end face of the head pipe 272, and a positioning groove 274e which effects positioning by engaging with a projecting portion of the head pipe 272.

The first bearing 275 is made of an outer race 275a fitted in the through-hole 274a of the top plate 274, an inner race 275b screwed onto a male screw portion 273b of the steering shaft 273, multiple balls 275c interposed between these outer and inner races 275a and 275b, and a retainer (not shown) which retains the balls 275c. The inner race 257b also plays the role of an adjusting nut.

The bottom plate 277 is made of a body portion 277b having the through-hole 277a, a fitting portion 277c fitted in the through-hole 272a of the head pipe 272, a flange 277d fitted in abutment with the lower end face of the head pipe 272, and a positioning groove 277e which positions the bottom plate 277 by engaging with a lower projecting portion of the head pipe 272.

The second bearing 278 is made of an outer race 278a fitted in the through-hole 277a of the bottom plate 277, an inner race 278b fitted on the steering shaft 273, multiple balls 278c interposed between these outer and inner races 278a and 278b, and a retainer (not shown) which retains the balls 278c.

As is apparent from the above description, the steering shaft 273 is rotatably secured to the head pipe 272 via the top plate 274 and the bottom plate 277 and the first bearing 275 and the second bearing 278.

A handlebar 232 is secured to an upper end portion of the steering shaft 273 by a securing bolt 279.

In Fig. 10, the center line P11 of the steering shaft 273 is nearly parallel to the center line P13 of the head pipe 272 (the center of the through-hole 272a), and is positioned forwardly of the center line P13 of the head pipe 272. Moreover, the center line P11 of the steering shaft 273 agrees with the respective centers of the through-holes 274a and 277a of the top plate 274 and the bottom plate 277 which are secured to the top and bottom of the head pipe 272.

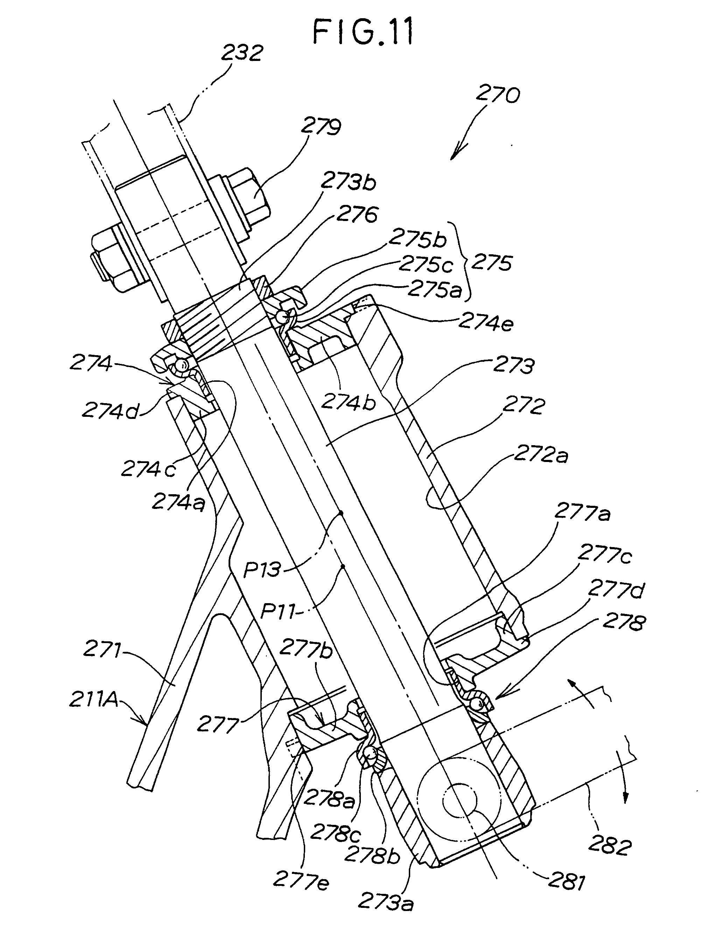

Fig. 11 shows a second example mode of attachment of the steering shaft 273 to the head pipe 272. As shown in the Figure, the center line P11 of the steering shaft 273 is nearly parallel to the center line P13 of the head pipe 272 (the center of the through-hole 272a), and is positioned rearwardly of the center line P13 of the head pipe 272. Moreover, the center line P11 of the steering shaft 273 agrees with the respective centers of the through-holes 274a and 277a of the top plate 274 and the bottom plate 277 which are secured to the top and bottom of the head pipe 272. By replacing the top plate 274 and the bottom plate 277 shown in Fig. 10 with the top plate 274 and the bottom plate 277 shown in Fig. 11, the position of the center line P11 of the steering shaft 273 can be changed.

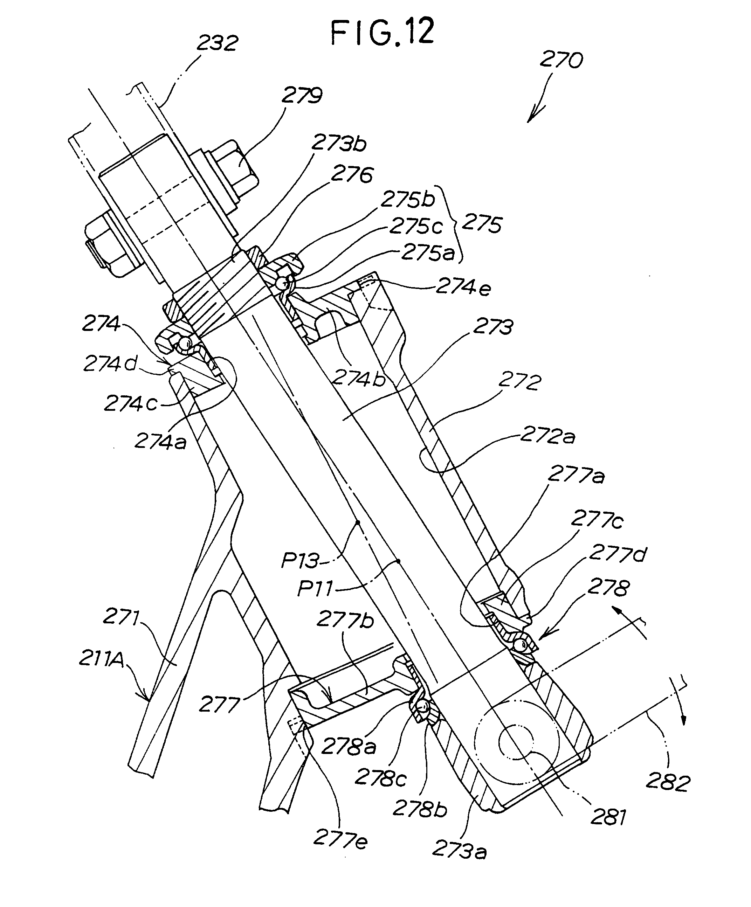

Fig. 12 shows a third example mode of attachment of the steering shaft 273 to the head pipe 272. As shown, the center line P13 of the head pipe 272 and the center line P11 of the steering shaft 273 are made to intersect with each other so that the lower end portion 273a of the steering shaft 273 is positioned forwardly of the center line P13 of the head pipe 272. The center line P11 of the steering shaft 273 agrees with the respective centers of the through-holes 274a and 277a of the top plate 274 and the bottom plate 277 which are secured to the top and bottom of the head pipe 272. By replacing the top plate 274 and the bottom plate 277 shown in Fig. 10 with the top plate 274 and the bottom plate 277 shown in Fig. 12, the position of the center line P11 of the steering shaft 273 can be changed.

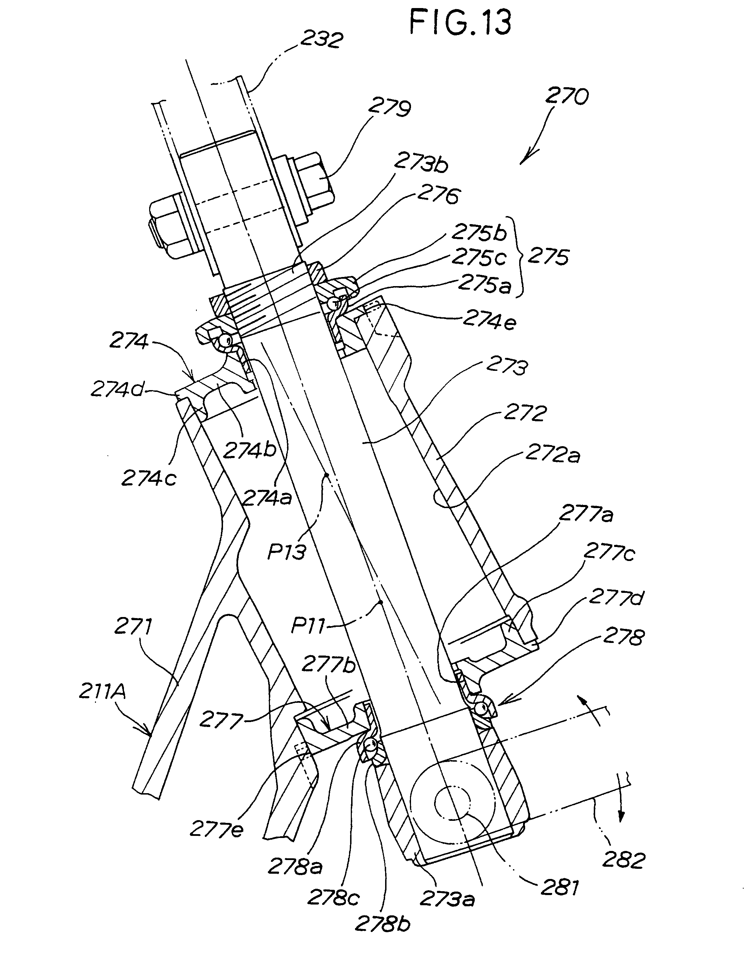

Fig. 13 shows a fourth example mode of attachment of the steering shaft 273 to the head pipe 272. As shown, the center line P13 of the head pipe 272 and the center line P11 of the steering shaft 273 are made to intersect with each other so that the lower end portion 273a of the steering shaft 273 is positioned rearwardly of the center line P13 of the head pipe 272. The center line P11 of the steering shaft 273 agrees with the respective centers of the through-holes 274a and 277a of the top plate 274 and the bottom plate 277 which are secured to the top and bottom of the head pipe 272. By replacing the top plate 274 and the bottom plate 277 shown in Fig. 10 with the top plate 274 and the bottom plate 277 shown in Fig. 13, the position of the center line P11 of the steering shaft 273 can be changed.

One example of a procedure for securing the steering shaft 273 to the head pipe 272 will be described below with reference to Fig. 10.

Firstly, the second bearing 278 is fitted to the steering shaft 273 having the lower end portion 273a, and the outer race 278a of the second bearing 278 is fitted into the through-hole 277a of the bottom plate 277. After that, the fitting portion 277c of the bottom plate 277 is fitted into the through-hole 272a of the head pipe 272 so that the steering shaft 273 is inserted from below the head pipe 272.

Then, the steering shaft 273 is inserted into the through-hole 274a of the top plate 274, while the fitting portion 274c of the top plate 274 is fitted into the through-hole 272a of the head pipe 272. Thereafter, the outer race 275a of the first bearing 275 is fitted into the through-hole 274a of the top plate 274, and the multiple balls 275c are incorporated. Then, the inner race 275b of the first bearing 275 is screwed onto the male screw portion 273b of the steering shaft 273, whereby the steering shaft 273 is rotatably secured to the head pipe 272 via the top plate 274 and the bottom plate 277 as well as the first bearing 275 and the second bearing 278. By adjusting the screwing amount of the inner race 275b, it is possible to adjust the first bearing 275 and the second bearing 278 to their optimum secured states.

Finally, after the lock nut 276 is screwed onto the male screw portion 273b of the steering shaft 273, the handlebar 232 is secured to the upper end portion of the steering shaft 273 with the bolt 279, whereby the process of securing the steering shaft 273 is completed.

After that, if the center line P11 of the steering shaft 273 is to be changed from the position shown in Fig. 10 to the position shown in Fig. 11, 12 or 13, firstly, the steering shaft 273 is temporarily removed in the reverse procedure to the above-described securing procedure. Then, the arbitrary top plate 274 and bottom plate 277 are selected and rearranged in the above-described securing procedure.

The above-described method of changing the angle and the position of the center line P11 of the steering shaft 273 with respect to the center line P13 of the head pipe 272 will be described in brief below.
(1) Plural top plates 274 and plural bottom plates 277 are prepared in which the centers of their through-holes 274a and 277a with respect to the center line P13 of the head pipe 272 differ according to the diameters of front wheels (first step).
(2) The corresponding top and bottom plates 274 and 277 are selected for each of the different diameters of the front wheels (second step).
(3) The selected top and bottom plates 274 and 277 are secured to the head pipe 272, and the steering shaft 273 is secured to the through-holes 274a and 277a of the top and bottom plates 274 and 277 (third step).

As is apparent from the above description, by replacing the plural top plates 274 and the plural bottom plates 277 according to the diameters of front wheels, it is possible to change the center line P11 of the steering shaft 273 to an arbitrary position and angle with respect to the center line P13 of the head pipe 272.

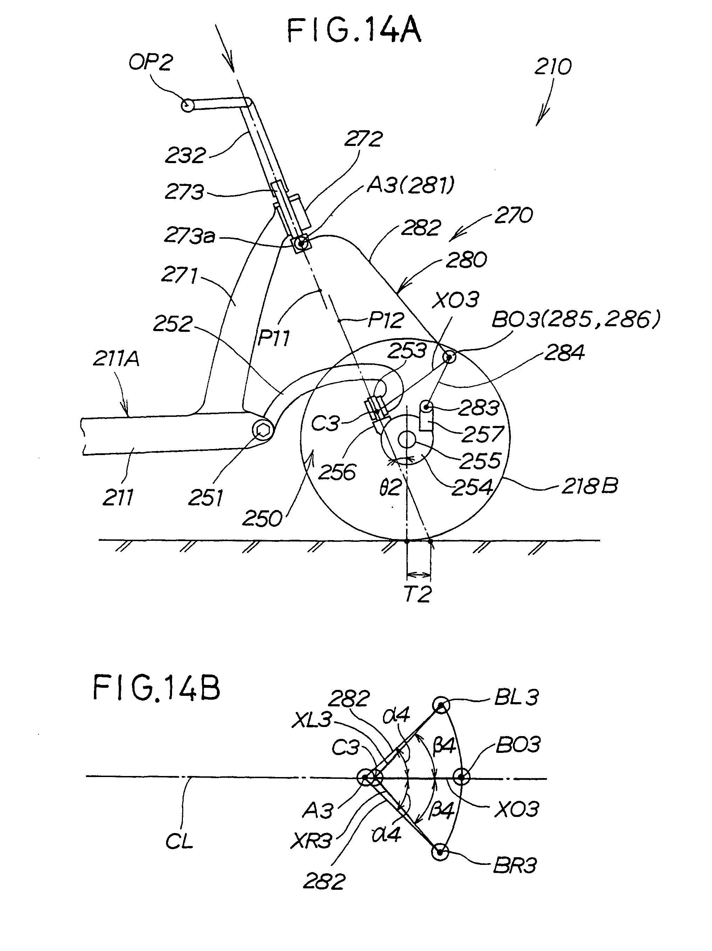

Figs. 14A and 14B show an example in which the front wheel 218A of large diameter as shown in Figs. 9A and 9B is replaced with a front wheel 218B of small diameter. In the motorcycle 210, an optimum caster angle θ2 and trail T2 are set to take account of steering characteristics obtainable when the front wheel 218A is replaced with the front wheel 218B of small diameter, and further, the relationship between the front suspension system 250 and the steering system 270 is appropriately set according to these caster angle θ2 and trail T2.

For example, when a manipulating position OP2 of the handlebar 232 is set to be nearly the same as the manipulating position OP1 shown in Fig. 9A, the center line P11 of the steering shaft 273 may be set to be raised more uprightly. Specifically, as shown in Fig. 13, the lower end portion 273a of the steering shaft 273 is moved rearwardly and the center line P13 of the head pipe 272 and the center line P11 of the steering shaft 273 are made to intersect with each other.

When the center line P11 is raised in this manner, the swing arm 252 needs to be replaced with a swing arm which is shorter by that amount. The center line P12 of the kingpin 253 is offset forwardly with respect to the center line P11 of the steering shaft 273. Accordingly, the point C3 lies at a position which is forwardly away from the point A3. By changing the offset quantity as illustrated in Fig. 14B, it is possible to change the proportion of the steering angle β4 to the steering angle α4. By changing the lengths of the first and second links 282 and 284, it is possible to change the proportion of the steering angle β4 to the steering angle α4. By changing the proportion in this manner, it is possible to change the steering force due to the steering shaft 273.

In the embodiment just described, the center line P12 of the kingpin 253 may be offset rearwardly of the center line P11 of the steering shaft 273, as in the arrangement of Fig. 8A.

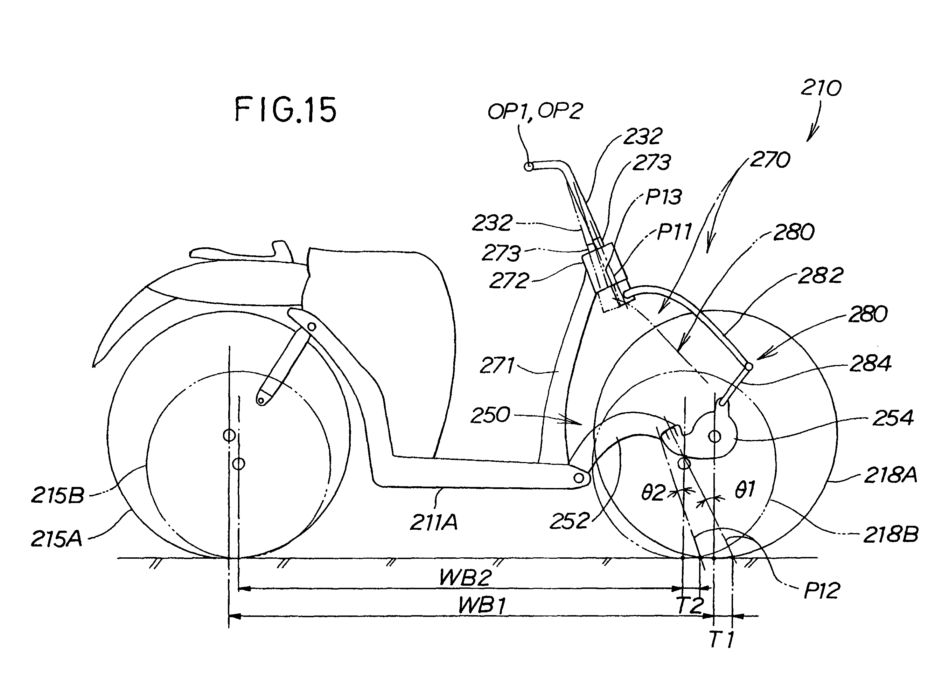

Fig. 15 shows a schematic view of a motorcycle according to the second embodiment. In Fig. 15, for the sake of comparative illustration, the front wheel 218A of large diameter, the front suspension system 250 and the steering system 270 which are shown in Fig. 9A are represented by solid lines, while the front wheel 218B of small diameter and the steering system 270 which are shown in Fig. 14A are represented by imaginary lines.

If the motorcycle 210 has the front wheel 218A of large diameter and a rear wheel 215a of large diameter which are shown by solid lines, the handlebar 232 and the steering shaft 273 lie at positions shown by solid lines, and the wheel base between the front and rear wheels 218A and 215A is WB1, the caster angle is θ1, and the trail is T1.

If the motorcycle 210 has the front wheel 218B of small diameter and a rear wheel 215b of small diameter which are shown by imaginary lines, the handlebar 232 and the steering shaft 273 lie at positions shown by imaginary lines, and the wheel base between the front and rear wheels 218B and 215B is WB2, the caster angle is θ2, and the trail is T2.

As is apparent from the above description, according to the diameters of the front wheels 218A and 218B, it is possible to change the center line P11 of the steering shaft 273 to an arbitrary position and angle. Accordingly, even if the diameters of the front wheels 218A and 218B are changed, it is not necessary to change the position of the head pipe 272. As a result, it is possible to use in common the vehicle frame 211A on which the head pipe 272 is integrally formed, whereby it is possible to reduce the cost of the motorcycle 210.

Moreover, by appropriately setting the caster angles θ1 and θ2 and the trails T1 and T2, it is also possible to use in common at least the steering shaft 273 and a link mechanism 280 of the steering system 270. Accordingly, in the front suspension system 250, only the swing arm 252 needs to be changed.

Moreover, by changing the lengths of the first and secone links 282 and 284 according to the diameters of the front wheels 218A and 218B, it is possible to change the proportion of the steering angle of each of the front wheels 218A and 218B to the steering angle of the steering shaft 273.

By changing the proportion, it is possible to change the steering force due to the steering shaft 273 to an optimum one.

As described above, in the present embodiments, although a scooter type motorcycle has been illustrated as each of the motorcycles 10 and 210, the present invention is not limited to this type, and can also be applied to a three-wheeler equipped with one front wheel and two rear wheels.

The universal joints 86 and 286 may be uniform couplings which connect the unparallel first and second links 82 and 84 or 282 and 284, and may be ball joints, universal joints or equivalent.

It is arbitrary that the center lines P2 and P12 of the kingpins 53 and 253 should be made parallel to the center lines P1 and P11 of the steering shafts 73 and 273.

### INDUSTRIAL APPLICABILITY

Since a universal joint of a link mechanism absorbs a positional deviation of a steering shaft which occurs when the shape and dimensions of a vehicle frame are changed, it is not necessary to change a swing arm and a link member, whereby it is possible to effectively reduce the cost required to change the design of a motorcycle and a three-wheeler.

Moreover, since a positional deviation of a steering shaft axis which occurs when the diameters of front and rear wheels are changed can be adjusted by changing a top plate and a bottom plate provided at the top and the bottom of a head pipe, it becomes unnecessary to change the vehicle frame. Stated otherwise, it become possible to use the same body frame upon changing the wheel diameter and altering the design of the motorcycle or three-wheeler, thereby reducing the cost of production.

## Claims

1. A front wheel steering apparatus for steering a front wheel (18) of one of a motorcycle and a three-wheeler, said apparatus comprising: a main frame (11); a swing arm (52) secured vertically swingably to said main frame; an axle holder block (54) secured horizontally turnably to said swing arm via a kingpin; (53) a front wheel (18) rotatably secured to said axle holder block; (54) a knuckle (57) extending from said axle holder block, (54) and a link mechanism (80) connected to a steering shaft (73) which in turn is rotatably secured to a head pipe (72) having one end connected to said knuckle (57) and an opposite end provided integrally with said main frame, **characterized in that**:
said kingpin (53) has a center line offset with respect to a center line of said steering shaft (73) and positioned not to pass through a center of said front wheel (18); and
said link mechanism (80) comprises a bendable link having a first link (82) and a second link (84) interconnected at a joint thereof via a universal joint (86) so that said first and second links can bend about the joint for accommodating vertical movements of said front wheel.

2. A front wheel steering apparatus according to claim 1, wherein said universal joint (86) comprises a ball joint.

3. A front wheel steering apparatus according to claim 1 or 2, wherein said head pipe (272) has top (274) and bottom plates (277) replaceably disposed at upper and lower parts thereof, each of said top and bottom plates having a through-hole for allowing passage of said steering shaft (273) therethrough so that said center line of said steering shaft intersects with a center line of said head pipe at a given angle.

## Patentansprüche

1. Vorderradlenkvorrichtung zum Lenken eines Vorderrads (18) eines Motorrads oder eines Dreirads, wobei die Vorrichtung umfasst: einen Hauptrahmen (11); einen Schwingarm (52), der an dem Hauptrahmen vertikal schwenkbar gelagert ist; einen Achshalterblock (54), der an dem Schwingarm über einen Achsschenkelbolzen (53) horizontal drehbar gelagert ist; ein Vorderrad (18), das an dem Achshalterblock (54) drehbar gelagert ist; einen Achsschenkel (57), der von dem Achshalterblock (54) absteht, sowie einen Gliedermechanismus (80), der mit einer Lenkwelle (73) verbunden ist, die wiederum an einem Kopfrohr (72) drehbar gelagert ist, wobei dessen eines Ende mit dem Achsschenkel (57) verbunden ist und dessen entgegengesetztes Ende integral mit dem Hauptrahmen vorgesehen ist, **dadurch gekennzeichnet dass**:
der Achsschenkelbolzen (53) eine Mittellinie aufweist, die in Bezug auf eine Mittellinie der Lenkwelle (73) versetzt und so angeordnet ist, dass sie nicht durch eine Mitte des Vorderrads (18) hindurchgeht und
wobei der Gliedermechanismus (80) ein knickbares Glied umfasst, das ein erstes Glied (82) und ein zweites Glied (84) aufweist, die an einem Gelenk davon über ein Universalgelenk (86) miteinander verbunden sind, so dass die ersten und zweiten Glieder um das Gelenk geknickt werden können, um Vertikalbewegungen des Vorderrads aufzunehmen.

2. Vorderradlenkvorrichtung nach Anspruch 1, worin das Universalgelenk (86) ein Kugelgelenk umfasst.

3. Vorderradlenkvorrichtung nach Anspruch 1 oder 2, worin das Kopfrohr (272) Deck- (274) und Bodenplatten (277) aufweist, die an Ober- und Unterteilen davon austauschbar angeordnet sind, wobei die Deck- und Bodenplatten jeweils ein Durchgangsloch aufweisen, um den Durchtritt der Lenkwelle (273) zu erlauben, so dass sich die Mittellinie der Lenkwelle mit einer Mittellinie des Kopfrohrs mit einem gegebenen Winkel schneidet.

## Revendications

1. Dispositif de direction d'une roue avant destiné à diriger une roue avant (18) d'un cycle à moteur et d'un trois roues, ledit dispositif comprenant : un châssis principal (11); un bras oscillant (52) fixé verticalement audit châssis principal pour pouvoir osciller; un bloc de serrage d'axe (54) fixé horizontalement audit bras oscillant pour pouvoir tourner par l'intermédiaire d'un pivot central (53); une roue avant fixée audit bloc de serrage d'axe (54) pour pouvoir tourner; une rotule (57) s'étendant dudit bloc de serrage d'axe (54) et un mécanisme d'articulation (80) raccordé à un arbre de direction (73) qui, à son tour, est fixé à un tube de direction (72) ayant une extrémité raccordée à ladite rotule (57) et une extrémité opposée solidaire dudit châssis principal, **caractérisé en ce que** :
ledit pivot central (53) a un axe décalé par rapport à un axe dudit arbre de direction (73) et positionné pour ne pas passer à travers un centre de ladite roue de direction (18); et
ledit mécanisme d'articulation (80) comprend une articulation pliable comportant une première articulation (82) et une seconde articulation (84) interconnectées à un joint de celles-ci par l'intermédiaire d'un joint universel (86), de sorte que la première et la seconde articulation peuvent se plier autour du joint pour s'adapter aux mouvements verticaux de ladite roue avant.

2. Dispositif de direction d'une roue avant selon la revendication 1, dans lequel ledit joint universel (86) comprend un joint à rotule.

3. Dispositif de direction d'une roue avant selon la revendication 1 ou 2, dans lequel ledit tube de direction (72)comporte une plaque de dessus (274) et une plaque de dessous (237) disposées pour pouvoir être remplacées dans des parties supérieure et inférieure de celui-ci, chacune desdites plaques de dessus et de dessous comportant un trou débouchant pour permettre le passage dudit arbre de direction (273), de sorte que ledit axe dudit arbre de direction se coupe avec un axe dudit tube de direction selon un angle donné.
